# FASCICULE DE BREVET EUROPEEN

(11) **EP 0 842 224 B1**
(45) Date de publication et mention de la délivrance du brevet: **18.08.2004**
(21) Numéro de dépôt: 97927247.3
(22) Date de dépôt: 05.06.1997
(51) Int. Cl.: C08L 77/00, C08L 77/02, C08L 23/08, C08L 101/00, C08F 283/04

(54) **RESINES THERMOPLASTIQUES SOUPLES A RESISTANCE A LA TRACTION AMELIOREE**
FLEXIBLE THERMOPLASTISCHE HARZE MIT VERBESSERTER ZUGSTÄRKE
FLEXIBLE THERMOPLASTIC RESINS WITH IMPROVED TENSILE STRENGTH

(30) Priorité: 05.06.1996 FR 9606921
(43) Date de publication de la demande: 20.05.1998
(73) Titulaire: Atofina, 92800 Puteaux (FR)
(72) Inventeur: MONTANARI, Thibaut, F-27300 Bernay (FR); GUIBOUIN, Chrystelle, F-27300 Bernay (FR); HERT, Marius, F-27470 Serquigny (FR); PERRET, Patrice, F-27470 Serquigny (FR); THOMASSET, Jacques, F-27300 Bernay (FR); ROUMILHAC, Didier, F-27470 Serquigny (FR)
(74) Mandataire: Neel, Henry
(86) Numéro de dépôt international: PCT/FR1997/001003
(87) Numéro de publication internationale: WO 1997/046621

(56) Documents cités:
- EP-A- 0 234 819
- EP-A- 0 284 379
- EP-A- 0 423 628
- EP-A- 0 436 080
- EP-A- 0 683 210
- FR-A- 2 603 292
- GB-A- 2 287 028

## Description

L'invention concerne des compositions de résines thermoplastiques multiphases et plus particulièrement des compositions se présentant sous la forme d'une matrice dans laquelle sont dispersés des nodules.

De nombreux thermoplastiques doivent être modifiés par incorporation de caoutchoucs ou d'autres polymères par exemple pour en modifier le module de flexion ou améliorer la résistance au choc.

La demanderesse a découvert que si dans une matrice (M) contenant des nodules (S) on remplaçait une partie de (S) par un polymère (K) on pouvait améliorer la contrainte à la traction tout en conservant le module de flexion. De plus très souvent il en résulte aussi une réduction de la taille des nodules de la phase dispersée dans (M).

Ceci présente de nombreux avantages, par exemple quand le polymère de la matrice est transparent ou même translucide, la réduction de la taille des nodules augmente la transparence ou le rend plus translucide à taux de phase dispersée constant. La résistance au choc est aussi améliorée.

US 5 070 145 décrit des compositions constituées de 80 parties de polyamide-6 (PA-6) ou polyamide-6,6 (PA-6,6) dans lesquelles on a dispersé 20 parties d'un mélange (i) d'un copolymère de l'éthylène et d'un acrylate d'éthyle ou de butyle et (ii) d'un copolymère de l'éthylène, de l'acrylate d'éthyle et de l'anhydride maléique. Ces compositions présentent une bonne résistance au choc.

EP 284 379 décrit des compositions multiphases de polyamide et de copolymère d'éthylène se présentant sous la forme d'une matrice de polyamide dans laquelle sont dispersés des nodules (1) d'un copolymère de l'éthylène, de l'acrylate d'éthyle et de l'anhydride maléique, dans ces nodules (1) sont dispersés des nodules de polyamides. On commence par préparer ces nodules (1) en dispersant du polyamide dans le copolymère d'éthylène puis on réticule, ensuite on disperse ces nodules dans du polyamide. Ces compositions sont aussi présentées comme ayant une bonne résistance au choc.

Le brevet FR 2 719 849 décrit des compositions thermoplastiques consistant en une matrice d'un polymère thermoplastique dans laquelle sont dispersés des nodules d'un deuxième polymère thermoplastique partiellement ou totalement encapsulé par un copolymère d'éthylène. On prépare ces compositions en effectuant d'abord l'encapsulation du deuxième polymère, ensuite on ajoute l'autre polymère formant la matrice dans des conditions telles qu'on ne détruit pas les capsules. Cette préparation est effectuée en deux étapes complètement séparées ou l'une à la suite de l'autre dans la même extrudeuse. Ces compositions présentent à la fois une bonne souplesse et une bonne résistance au choc. Les exemples montrent des matrices de PA-6, PA-12 ou de PBT (polybutylène téréphtalate) dans lesquelles sont dispersés des nodules de PA-6,6 encapsulé par un copolymère d'éthylène, d'acrylate d'éthyle et de méthacrylate de glycidyle. Un exemple comparatif montre que dans une matrice de PA-6 les nodules de PA-6,6 encapsulés par le copolymère d'éthylène sont plus gros que les nodules formés seulement du copolymère d'éthylène.

La présente invention est donc une composition thermoplastique comprenant au moins un polymère (M) formant matrice dans laquelle sont dispersés au moins un polymère (S) et au moins un polymère (K) et telle que sa résistance à la traction est supérieure à celle d'une composition comprenant seulement (M) et (S) la proportion en poids de (M) étant la même.

Pour modifier les propriétés de choc ou le module de flexion d'un polymère (M) il est nécessaire d'y ajouter un plastifiant et/ou un polymère (S). L'inconvénient du plastifiant est qu'au-delà d'une certaine quantité il exsude et donc les propriétés ne sont pas conservées. Si on augmente trop la quantité de (S) il peut y avoir des problèmes de compatibilité et on peut aussi affecter une autre propriété. Par exemple si on augmente la quantité de (S) dans (M) on obtient bien une baisse du module de flexion mais une dégradation de la résistance à la traction qui peut s'exprimer aussi par une baisse de la résistance à l'éclatement d'un tube extrudé.

La demanderesse a donc découvert qu'en ajoutant un polymère (K) à un mélange de (S) dans (M) on améliorait la résistance à la traction. Plus précisément en remplaçant une partie de (S) par (K) de manière à conserver le module de flexion on obtenait une amélioration de la résistance à la traction. Cette résistance peut se mesurer par la contrainte à 50 % d'allongement selon ISO R527. Elle peut aussi se traduire par la contrainte à l'éclatement d'un tube extrudé et mesurée à 23°C selon NFR 12632.

On peut aussi exprimer ces propriétés par le rapport module d'éclatement/module de flexion.

La demanderesse a observé que le mélange de (M) + (S) + (K) se présentait sous la forme d'une matrice (M) et d'une phase dispersée comprenant des nodules de (K), des nodules de (K) encapsulés en tout ou partie dans (S) et des nodules de (S).

En choisissant des polymères (K) très compatibles avec (S) on obtient une phase dispersée de (K) et (S) dans (M) constituée essentiellement de nodules de (K) encapsulés en tout ou partie dans (S) et de plus en choisissant (K) et (M) dans la même famille (par exemple deux polyamides ou deux polyesters) et de préférence très proches par exemple PA 11 et PA 12 ces nodules encapsulés peuvent être plus petits que les nodules de (S) dans (M).

Ceci est d'autant plus vrai pour des quantités de phase dispersée essentiellement égales.

Ainsi ces compositions sont aussi très utiles pour les polymères (M) transparents qu'on peut utiliser par exemple pour faire des emballages, des tuyaux dont on doit voir le contenu, des réservoirs dont on doit voir le niveau ou des films de protection.

Pour un polymère (M) transparent l'augmentation de la quantité de (S) pour baisser le module de flexion peut aussi provoquer selon la nature de (S) une baisse de la transparence.

Selon la présente invention bien que dans les mélanges (M) + (S) + (K) il reste des nodules de (S) leur nombre n'est pas suffisant pour gêner la transparence, l'essentiel des nodules étant des nodules de (K) encapsulés en tout ou partie dans (S) et de taille plus faible que les nodules de (S) dans (M) la transparence de (M) + (S) + (K) est meilleure que la transparence de (M) + (S) tout au moins à proportion de (M) constante.

Le polymère (M) peut être un mélange de plusieurs polymères miscibles et formant une phase homogène. Il en est de même du polymère (K) et du polymère (S). Les compositions de l'invention peuvent aussi comprendre plusieurs types de nodules encapsulés par exemple des nodules de (K1) encapsulés dans (S) et des nodules de (K2) encapsulés dans (S) ou encore des nodules de (K1) encapsulés dans (S1) et des nodules de (K2) encapsulés dans (S2).

Ainsi on a découvert par exemple que dans une matrice de polyamide 11 (PA-11) les nodules d'un copolymère éthylènelacrylate d'alkyle/anhydride maléique ont une taille de 0,2 µm alors que dans la même matrice les nodules de polyamide 12 (PA-12) encapsulés dans le même copolymère éthylène/acrylate d'alkyle/anhydride maléique ont une taille de 0,07 µm (il s'agit de la taille du nodule Dv (diamètre en volume) avec la capsule c'est-à-dire environ le diamètre extérieur de la capsule).

Les compositions de l'invention présentent de nombreux avantages:
- Elles sont plus stables.
- Elles sont essentiellement aussi flexibles que les compositions de (M) comprenant des nodules contenant seulement (S) car on peut écranter le polymère (K) avec une épaisseur suffisante de capsule (S). On reviendra sur ce point dans la suite du texte.
- Les morphologies plus fines favorisent aussi la tenue des lignes de ressoudure.
- Elles sont très faciles à fabriquer, on procède par simple mélange de (M), (K) et (S) par exemple sur une extrudeuse courte ou peu malaxante (extrudeuse standard ou bas de gamme) ou même directement sur une presse à injecter alors que dans l'art antérieur il est nécessaire d'opérer en 2 étapes.
- Elles ont une bonne résistance au choc.
- (M) n'a besoin que de la majorité relative pour s'imposer en tant que matrice et éviter l'inversion de phase. On pourrait donc par exemple avoir 35 parties de (M), 32,5 parties de (S) et 32,5 parties de (K).
- De plus ces compositions sont particulièrement stables elles peuvent être préparées et vendues sous forme de granulés et utilisées dans des machines conventionnelles, elles peuvent aussi être recyclées, par exemple s'il y a des chutes de fabrication dues à des découpes.

Les polymères (M) et (K) peuvent être choisis parmi les thermoplastiques (M) et (S) sont choisis compatibles. (S) étant dispersé dans la matrice de (M) sous forme de nodules, (M) et (S) sont jugés d'autant plus compatibles que les nodules de (S) sont plus petits.

Cependant on estime que si les nodules de (S) sont supérieurs à 10 µm c'est peu compatible, si les nodules sont entre 0,5 et 10 µm et de préférence entre 0,5 et 2 µm c'est compatible et en dessous de 0,5 µm très compatible.

(K) doit être compatible avec (S) ; on choisit donc (K) en préparant des dispersion de (K) dans (S) et on mesure la taille des nodules. Il s'agit du critère général de choix, parmi les différents (K) répondant à ce critère on effectue un autre choix en fonction des propriétés recherchées pour les compositions de l'invention. Cet autre choix peut être fonction du module, des propriétés chimiques, de la viscosité, de la température de fusion et de la réactivité.

Comme ci-dessus si les nodules de (K) dans (S) sont supérieurs à 10 µm c'est peu compatible, si les nodules sont entre 0,5 et 10 µm et de préférence entre 0,5 et 2 µm c'est compatible et en dessous de 0,5 µm très compatible.

On dit que la compatibilité de (K) avec (S) est la même que la compatibilité de (S) avec (M) quand les nodules de (S) dans (M) ont la même taille que les nodules de (K) dans (S). Il n'est pas nécessaire que la compatibilité de (K) avec (S) soit supérieure à la compatibilité de (S) avec (M). Avantageusement, la taille des nodules de (K) dans (S) ne doit pas être supérieure à deux fois à la taille des nodules de (S) dans (M) et de préférence elle est sensiblement égale ou inférieure. Cette valeur de deux fois de même que l'expression "sensiblement égale" est à adapter à la taille des nodules en effet la précision de la mesure est plus élevée pour les nodules supérieurs à 1 ou 5 µm que pour les nodules plus petits.

On ne sortirait pas du cadre de l'invention en faisant le test de compatibilité de (K) avec (S) en mesurant des nodules de (S) dans (K) puis en procédant comme décrit ci-dessus.

(K) ne doit pas aussi être trop compatible avec (M) pour qu'ils démixent et que l'essentiel de (K) se mette en nodules dans (M). Si (K) est rigoureusement identique à (M) alors on a des nodules de (S) dans (M). Mais (K) et (M) peuvent être par exemple deux polyamides différents ou deux polyamides dérivés des mêmes monomères et de propriétés physiques différentes. On effectue donc les mesures de compatibilité de (M) avec (S) et de (K) avec (S) comme indiqué précédemment. Si on désire obtenir une réduction de la taille des nodules on choisit (K) très compatible avec (S; et on vérifie si l'essentiel de (K) s'encapsule dans (S) quand on fait le mélange de (M), (K) et (S).

Avantageusement (M) et (K) sont choisis dans la même famille de polymères, par exemple ce sont deux polyamides, deux polyesters, etc...

Le mélange de (M) (K) et (S) est fait avantageusement à partir de (M), (K) et (S) qu'on introduit simultanément dans un dispositif de mélange de (K) dans le mélange de (M) et (S), ou de (M) dans le mélange de (K) et (S) ou encore (S) dans le mélange de (K) et (M). Cependant, on ne sortirait pas du cadre de l'invention en utilisant différentes étapes ou des ordres d'ajout différents pourvu qu'on obtienne la morphologie et/ou les propriétés désirées.

En plus des conditions de compatibilité ou d'incompatibilité, l'indice de fluidité (MFI) de (M) est avantageusement supérieur à celui de (K).

A titre d'exemple de polymères (M) on peut citer les polyoléfines, les polyamides, les polymères fluorés, les polyesters saturés, le polycarbonate, les résines styréniques, le PMMA, les polyuréthanes thermoplastiques (TPU), les copolymères à blocs polyamides, les copolymères à blocs polyester et blocs polyéther, le PVC, les copolymères de l'éthylène et de l'alcool vinylique (EVOH) et les polycétones.

On entend par polyamide (A) les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
- ou des mélanges de certains de ces monomères ce qui conduit à des copolyamides, par exemple le PA-6/12 par condensation du caprolactame et du lauryllactame.

Les polymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12.

La masse molaire en nombre des séquences polyamides est comprise entre 300 et 15 000 et de préférence entre 600 et 5 000. La masse des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 25°C.

Que les blocs polyéthers dérivent du polyéthylène glycol du polyoxypropylène glycol ou du polyoxytétraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient introduits dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol, du propylène glycol ou encore du tétraméthylène glycol.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50% en poids ou plus du polymère à blocs polyamide et blocs polyéther. Avantageusement, la quantité de polyamide et la quantité de polyéther sont dans le rapport (polyamide / polyéther) 50/50 à 80/20.

De préférence, les blocs polyamides et les blocs polyéther d'un même polymère (B) ont respectivement des masses Mn 1000/1000, 1300/650, 2000/1000, 2600/650 et 4 000 /1 000.

On entend par polyoléfine un polymère comprenant des motifs oléfines tels que par exemple des motifs éthylène, propylène, butène-1, ou tout autre alpha oléfine. A titre d'exemple, on peut citer :
- les polyéthylènes tels que les LDPE, HDPE, LLDPE ou VLDPE, le polypropylène, les copolymères éthylène / propylène, ou encore les PE métallocènes ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, le Melt Flow Index (MFI) peut être comprise entre 0,3 et 40.

A titre d'exemples de polymères fluorés, on peut citer le polyfluorure de vinylidène (PVDF), les copolymères comprenant du fluorure de vinylidène (VF2), les copolymères de l'éthylène et du tétrafluoroéthylène, le poly (trifluoroéthylène), les copolymères du trifluoroéthylène, les homo et copolymères de l'hexafluoropropène, les homo et copolymères du chlorotrifluoroéthylène. On utilise avantageusement le PVDF.

On entend par EVOH les copolymères de l'éthylène et de l'alcool vinylique. Ils proviennent de l'hydrolyse des copolymères éthylène / acétate de vinyle, cette hydrolyse pouvant être incomplète, il peut rester des motifs acétate de vinyle.

A titre d'exemple de polyester, on peut citer le PET (polyéthylène téréphtalate), le PBT (polybutylène téréphtalate) ou le PEN (polyéthylène naphténate).

Les copolymères à blocs polyesters et blocs polyéther sont des copolymères ayant des motifs polyéthers dérivés de polyétherdiols tels que le polyéthylène glycol (PEG), le polypropylène glycol (PPG) ou le polytétraméthylène glycol (PTMG), des motifs diacide carboxylique tels que l'acide téréphtalique et des motifs glycol (éthane diol) ou butane diol, 1-4. L'enchaînement des polyéthers et des diacides forme les segments souples alors que l'enchaînement du glycol ou du butane diol avec les diacides forme les segments rigides du copolyétherester.

De tels copolyétheresters sont décrits dans les brevets EP 402 883 et EP 405 227 dont le contenu est incorporé dans la présente demande.

A titre de polyuréthanes thermoplastiques, on peut citer les polyétheruréthannes, par exemple, ceux comprenant des motifs diisocyanates, des motifs dérivés de polyéther diols et des motifs dérivés de l'éthane diol ou du butane diol, 1-4.

On peut encore citer les polyesteruréthannes par exemple ceux comprenant des motifs diisocyanates, des motifs dérivés de polyesters diols amorphes et des motifs dérivés de l'éthane diol ou du butane diol, 1 -4.

Les polycétones sont des polymères comprenant substantiellement une mole d'oxyde de carbone pour chaque mole de monomère insaturé. Ce monomère peut être choisi parmi les alpha oléfines ayant de 2 à 12 atomes de carbone ou leurs dérivés de substitution. Il peut aussi être choisi parmi le styrène ou ses dérivés obtenus par substitution avec des alkyls tels que les méthylstyrènes, éthylstyrène et isopropylstyrène.

De préférence, les polycétones sont des copolymères de l'éthylène et de l'oxyde de carbone ou des copolymères de l'éthylène, du polypropylène et de l'oxyde de carbone.

Quand les polycétones sont des copolymères de l'éthylène, d'un deuxième monomère et de l'oxyde de carbone, il y a au moins deux motifs éthylène pour un motif du deuxième monomère et de préférence 10 à 100.

Les polycétones peuvent être représentées par la formule :

―(―CO―CH₂―CH₂―)ₓ―(―CO―A―)_{y}―

dans laquelle A désigne un monomère insaturé ayant au moins 3 atomes de carbone, le rapport x/y étant au moins 2.

Les motifs ―(―CO―CH₂―CH₂―) et ―(―CO―A―)― sont répartis au hasard dans la chaîne de polycétone.

Les masses molaires en nombre peuvent être comprises entre 1 000 et 200 000 avantageusement entre 20 000 et 90 000 (mesurées par chromatographie à perméation de gel). Les températures de fusion peuvent être comprises entre 175 et 300° C, le plus souvent entre 200 et 270° C.

Des synthèses de ces polycétones sont décrites dans les brevets US 4 843 144, et US 4 880 903 et US 3 694 412 dont le contenu est incorporé dans la présente demande.

A titre d'exemples de polymères (K) on peut citer les mêmes exemples que les polymères (M).

Le polymère (S) est tout produit défini plus haut qui est compatible avec (K) et (S) comme défini plus haut. Selon une variante (S) peut encapsuler (K) dans une matrice (M) et tel que les nodules ainsi encapsulés peuvent être plus petits que les nodules de (S) dans (M). Au sens de la présente invention (S) est tout produit qui se met sous forme de nodules dans une matrice (M) et qui se met aussi sous forme de nodules dans une matrice (K) ou qui peut être une matrice contenant des nodules (K). Avantageusement (S) est un thermoplastique ayant des affinités avec (M) et avec (K) et/ou pouvant réagir avec (M) et (K) ou ayant des affinités avec (M) et pouvant réagir avec (K) ou vice versa.

Par exemple (S) peut être une chaîne de polyoléfine ayant des greffons polyamide ou oligomères de polyamide ; ainsi (S) a des affinités avec les polyoléfines et les polyamides.

(S) peut être aussi un copolymère d'éthylène ayant des motifs anhydride maléique ; ainsi (S) a des affinités avec les polyéthylènes et peut réagir avec les polyamides.

A titre d'exemple de (S) on peut citer les polyoléfines fonctionnalisées, les polyesters aliphatiques greffés, les polymères à blocs polyéther et blocs polyamide éventuellement greffés, les copolymères de l'éthylène et d'un (méth)acrylate d'alkyle et/ou d'un ester vinylique d'acide carboxylique saturé.

(S) peut être aussi un copolymère à blocs ayant au moins un bloc compatible avec (M) et au moins un bloc compatible avec (K).

La polyoléfine fonctionnalisée est un polymère comprenant des motifs alpha oléfine et des motifs époxyde ou acide carboxylique ou anhydride d'acide carboxylique.

A titre d'exemple, on peut citer les polyoléfines citées dans les polymères (M) ou encore les polymères blocs SBS, SIS, SEBS ou EPDM greffés par des époxydes insaturés tels que le (méth)acrylate de glycidyle, ou par des acides carboxyliques tels que l'acide (méth)acrylique ou encore par des anhydrides d'acides carboxyliques insaturés tels que l'anhydride maléique.

On peut encore citer :
- les copolymères de l'éthylène, d'un époxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li / anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée est choisie parmi les copolymères éthylène / (méth)acrylate d'alkyle / anhydride maléique, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères monoaminés du caprolactame.

De préférence, c'est un copolymère éthylène / (méth)acrylate d'alkyle / anhydride maléique comprenant jusqu'à 40% en poids de (méth)acrylate d'alkyle et jusqu'à 10% en poids d'anhydride maléique.

Le (méth)acrylate d'alkyle peut être choisi parmi l'acrylate de méthyle, l'acrylate d'éthyle, l'acrylate de n-butyle, l'acrylate d'isobutyle, l'acrylate d'éthyl-2-hexyle, l'acrylate de cyclohexyle, le méthacrylate de méthyle et le méthacrylate d'éthyle.

A titre de polyesters aliphatiques greffés on peut citer la polycaprolactone greffée par de l'anhydride maléique, du méthacrylate de glycidyle, des esters vinyliques ou du styrène. Ces produits sont décrits dans la demande EP 711 791 dont le contenu est incorporé dans la présente demande.

Les polymères à blocs polyamide et blocs polyéthers ont été décrits plus haut dans les polymères (M). Ces produits peuvent être greffés par du chlorure de vinyle ou des acrylates d'alkyle. Ces produits sont décrits dans le brevet EP 365 398 dont le contenu est incorporé dans la présente demande.

Les polymères (M) (K) et (S) peuvent contenir des plastifiants, des charges, des ignifugeants, des fibres de verre etc...

La demanderesse a aussi découvert que le rapport entre les quantités de (S) et les quantités de (K) était important. Pour des valeurs de l'épaisseur de la capsule éventuellement partielle, c'est-à-dire de (S), comprise entre 10 et 30 % du diamètre encapsulé, c'est-à-dire de l'ensemble (S) + (K) les compositions de l'invention bénéficient de la présence de (S) + (K).

Pour des valeurs supérieures et avantageusement supérieures à 40 % il y a "écrantage", le nodule encapsulé produit les effets d'un nodule de même taille constitué seulement de (S) c'est-à-dire comme si (K) avait été remplacé par (S).

Pour des valeurs inférieures de l'épaisseur de la capsule on "ajoute" les propriétés de (K) à celles de (M). Par exemple si (M) est le PA-6 et (K) le PA-6,6 on augmente la température de flexion sous charge (HDT).

Pour les épaisseurs moyennes de (S) précitées les compositions de l'invention bénéficient deseffets de (S) et de (K).

On peut aussi être dans un cas limite où, à faible déformation, essentiellement (S) écrante (K) et où, à forte déformation, (S) commence à ne plus écranter (K). (K) commence alors à jouer un rôle (structurel) en apportant un surcroît de résistance (pourvu que (K) ait été choisi pour posséder ces propriétés par exemple PA-6,6 alors que (M) est le PA-11).

Ainsi par exemple les mesures de flexibilité et de résistance au choc seraient pleinement améliorées car (S) (en l'occurence un modifiant choc très souple) écrante pleinement (K). En revanche, lors d'un éclatement du tube (propriété destructive donc corollaire de fortes déformtions), le nodule va se déformer de telle sorte (épaisseur diminuant dans le sens perpendiculaire à la déformation) que (S) n'écrante plus totalement (K) et (K) donne alors un surcroît de résistance.

L'invention est particulièrement utile pour les thermoplastiques (M) tels que les polyamides et les polyesters saturés.

Avantageusement (M) et (K) sont choisis dans la même famille de polymères et (S) est choisi parmi les copolymères éthylène/(meth)acrylate d'alkyle/anhydride maléique, les copolymères éthylène/acétate de vinyle/anhydride maléique, les copolymères éthylène/(meth)acrylate d'alkyle/(meth)acrylate de glycidile et les copolymères éthylène/acétate de vinyle/(meth)acrylate de glycidile.

De préférence (M) et (K), dans la même famille de polymères, sont aussi choisis très proches, par exemple le PA-11 et le PA-12.

Selon des formes préférées de l'invention on choisit respectivement pour (M), (S) et (K) des polymères ayant les propriétés ou les caractéristiques suivantes :
rigide / souple / rigide
Tg haute / Tg basse / Tg haute
Tg >0°C / Tg <0°C / Tg >0°C (Tg désigne la température de transition vitreuse)
semi cristallin / amorphe ou quasi amorphe / semi cristallin
cristallin / amorphe ou quasi amorphe / cristallin

### Exemples

On désigne par PA-11 : un polyamide 11 de Mw [ 45 000 à 55 000 ] et ne contenant pas de plastifiant.

PA-11 p.20 : un polyamide 11 de type PA-11 contenant (7 ± 2) % en poids de BBSA (butyl benzène sulfonamide) comme plastifiant.

PA-11 p.40 : un polyamide 11 de type PA-11 contenant (12 ± 2) % en poids de BBSA.

PA-12 : un polyamide 12 de Mw 45 000 à 55 000.

L : un copolymère éthylènelacrylate de butyle/anhydride maléique de proportions en poids 79/18/3 de MFI 3 à 6 qui est un copolymère statistique obtenu par catalyse radicalaire haute pression

MFI désigne l'indice de fluidité (Melt Flow Index).

LOTRYL un copolymère éthylènelacrylate de méthyle de proportions en poids 84/16 et MFI 0,3 à 190°C 2,16 kg.

PA-12 p. 20 un polyamide 12 contenant (7 ± 2) % en poids de BBSA.

PA-12 p 40 un polyamide 12 contenant (12 ± 2) % en poids de BBSA.

EPRₘ désigne un EPR (copolymère éthylène propylène) maléisé.

Les résultats sont reportés sur le tableau suivant (les % sont en poids). Les compositions indiquées dans le tableau correspondent à un total de 100 %, le pourcentage du produit majoritaire ne figure pas. Ex. : PA-11 p.20 + 6 % L + 6 % PA-12 veut dire qu'il y a 88 % de PA-11 p.20 dans la composition.

Dans l'exemple 20 (PA-11 + 5 % PASA) veut dire un polyamide 11 contenant 95 % de PA-11 et 5 % de PASA.

PASA désigne un polyamide semi aromatique obtenu par condensation de lauryllactame, BMACM [bis-(3 methyl-4-aminocyclohexyl) methane] d'acide isophtalique et d'acide terephtalique tel que décrit dans EP 550308.

Dans le tableau le "module de flexion attendu" désigne le module de flexion calculé à partir des pourcentages des constituants sans tenir compte d'une synergie des constituants ou de la morphologie. Ainsi dans l'exemple 5 on attend 600 MPa parce qu'il y a la même quantité de PA et qu'on a mesuré 600 MPa pour l'exemple 3 (on a négligé la différence de module du PA 11 et du PA 12).

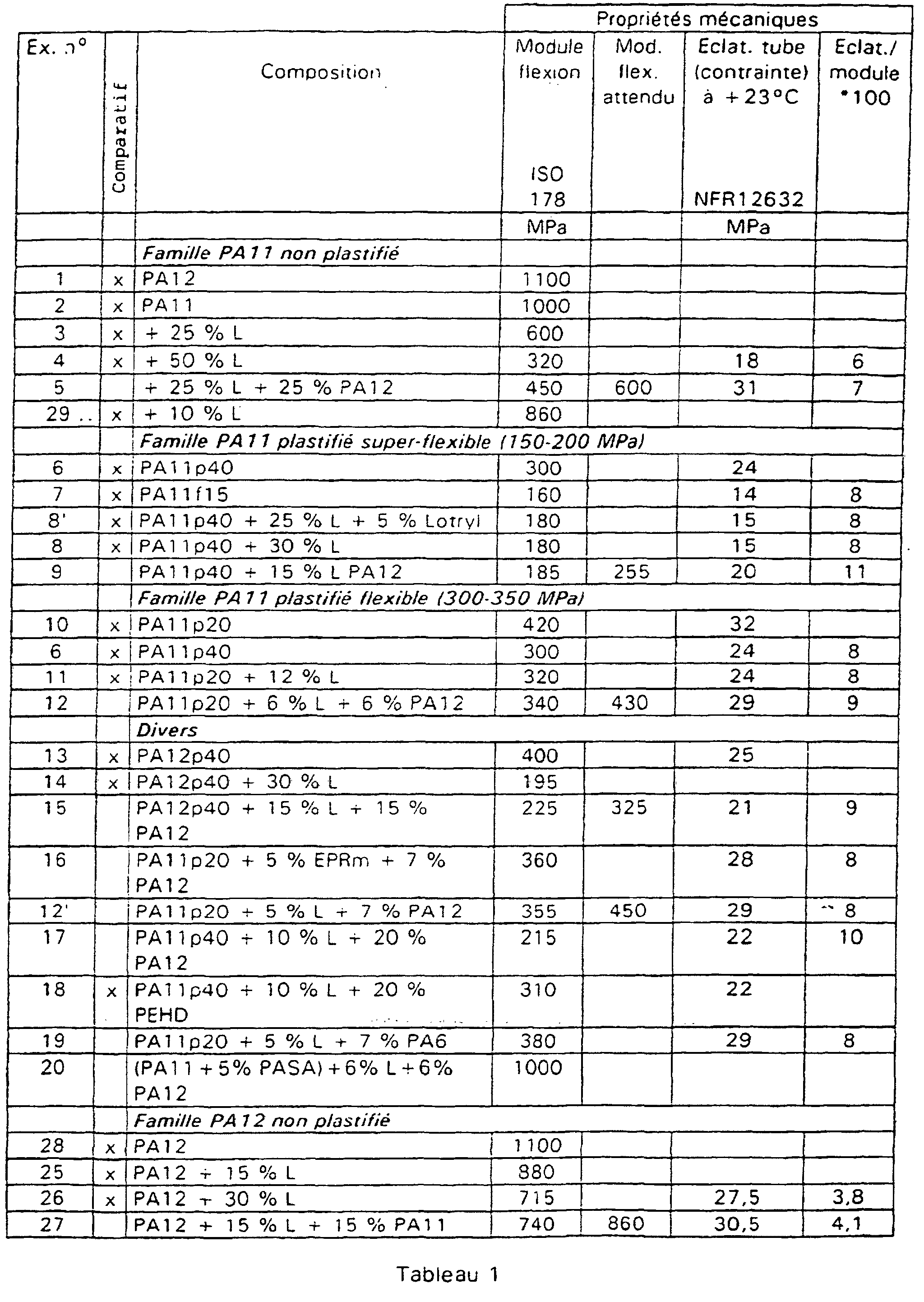

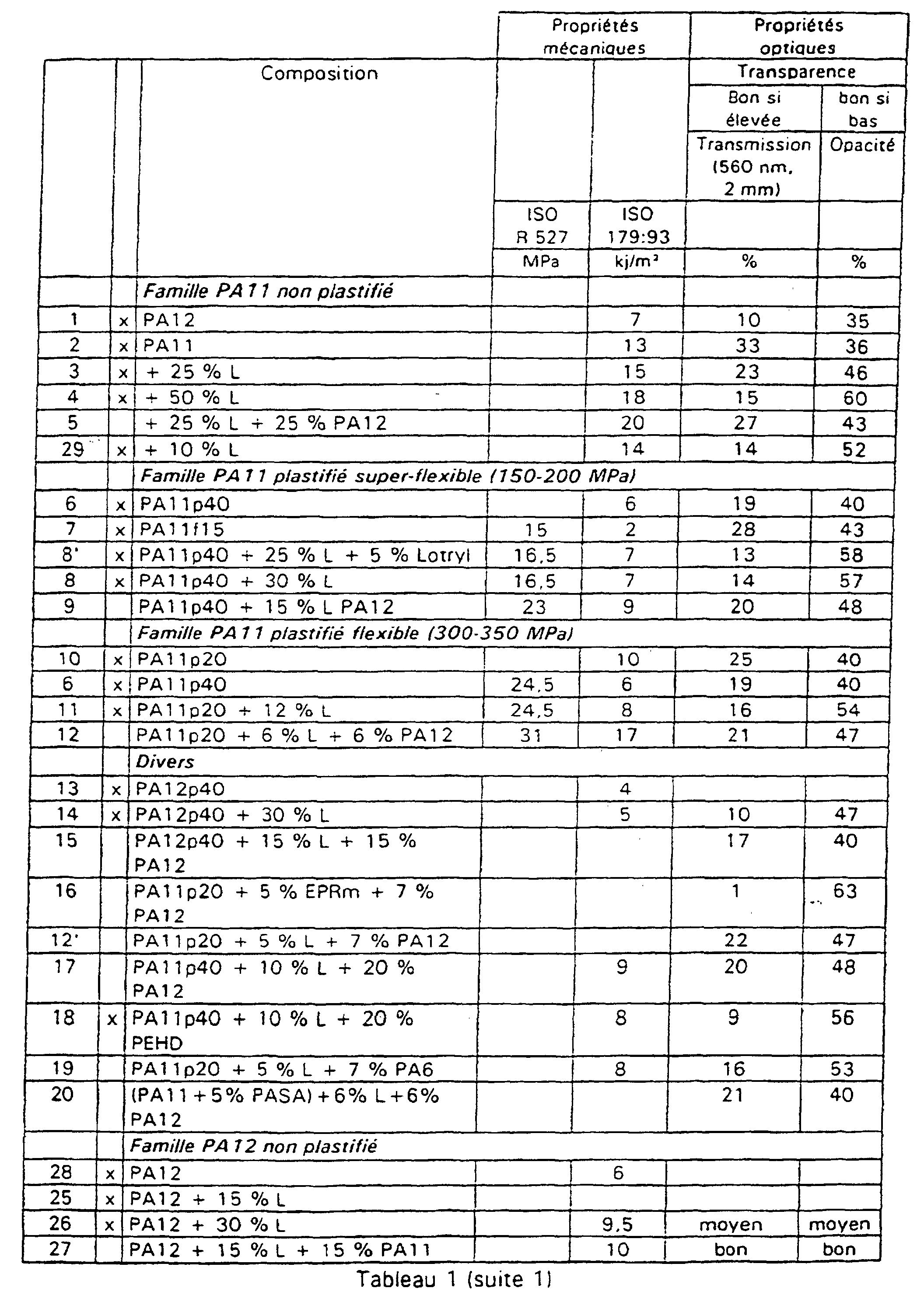

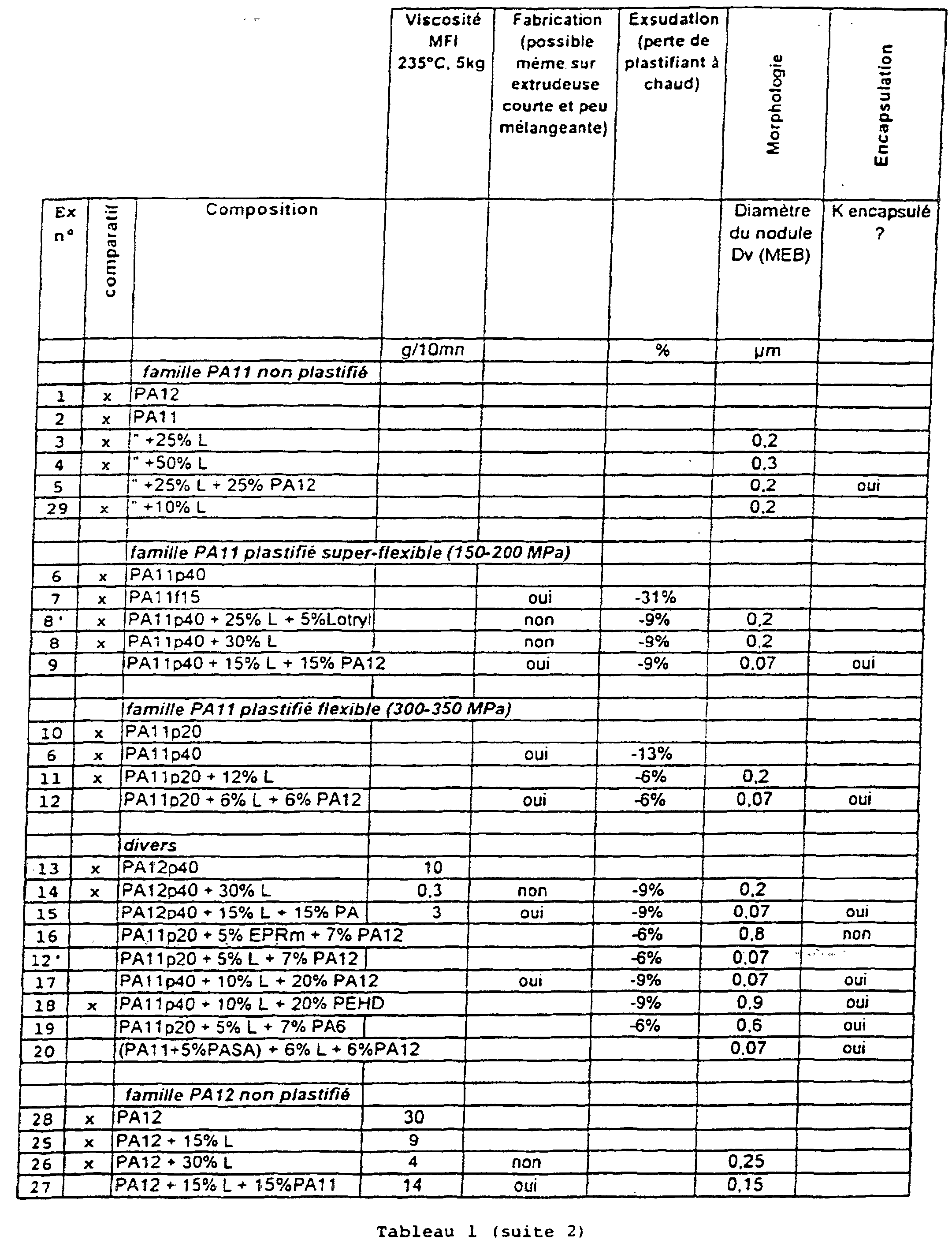

## Revendications

1. Composition thermoplastique comprenant au moins un polymère (M) formant matrice dans laquelle sont dispersés au moins un polymère (S) et au moins un polymère (K) et telle que sa résistance à la traction est supérieure à celle d'une composition comprenant seulement (M) et (S), la proportion en poids de (M) étant la même.

2. Composition selon la revendication 1 dans laquelle le mélange (M) + (S) + (K) se présente sous la forme d'une phase dispersée comprenant des nodules de (K), des nodules de (K) encapsulés en tout ou partie dans (S) et des nodules de (S).

3. Composition selon la revendication 1 ou 2 dans laquelle (M) est choisi parmi les polyoléfines, les polyamides, les polymères fluorés, les polyesters saturés, le polycarbonate, les résines styréniques, le PMMA, les polyuréthanes (TPU), les copolymères à blocs polyamides, les copolymères à blocs polyesters et blocs polyéthers, le PVC, les copolymères de l'éthylène, de l'alcool vinylique et les polycétones.

4. Composition selon l'une quelconque des revendications précédentes dans laquelle (K) est choisi parmi les mêmes polymères que (M).

5. Composition selon l'une quelconque des revendications précédentes dans laquelle (S) est choisi parmi les polyoléfines fonctionnalisées, les polyesters aliphatiques greffés et les polymères à blocs polyamide et blocs polyéther éventuellement greffés.

6. Composition selon l'une des revendications précédentes dans laquelle (M) est le PA-11, (S) est un copolymère éthylène/(méth)acrylate d'alkyle/anhydride maléique et (K) le PA-12.

## Patentansprüche

1. Thermoplastische Zusammensetzung, die mindestens ein Polymer (M), das eine Matrix bildet, in der mindestens ein Polymer (S) und mindestens ein Polymer (K) dispergiert sind, enthält und deren Zugfestigkeit größer ist als diejenige einer lediglich (M) und (S) enthaltenden Zusammensetzung bei gleichem Gewichtsanteil von (M).

2. Zusammensetzung nach Anspruch 1, in der die Mischung (M) + (S) + (K) in Form einer dispergierten Phase mit Kügelchen von (K), ganz oder teilweise in (S) verkapselten Kügelchen von (K) und Kügelchen von (S) enthält.

3. Zusammensetzung nach Anspruch 1 oder 2, in der (M) unter Polyolefinen, Polyamiden, Fluorpolymeren, gesättigten Polyestern, Polycarbonat, Styrolharzen, PMMA, Polyurethanen (TPU), Polyamid-Blockcopolymeren, Polyester-Polyether-Blockcopolymeren, PVC, Ethylen-Vinylalkohol-Copolymeren und Polyketonen ausgewählt ist.

4. Zusammensetzung nach einem der vorhergehenden Ansprüche, in der (K) unter den gleichen Polymeren wie (M) ausgewählt ist.

5. Zusammensetzung nach einem der vorhergehenden Ansprüche, in der (S) unter funktionalisierten Polyolefinen, gepfropften aliphatischen Polyestern und gegebenenfalls gepfropften Polyamid-Polyether-Blockpolymeren ausgewählt ist.

6. Zusammensetzung nach einem der vorhergehenden Ansprüche, in der es sich bei (M) um PA-11, bei (S) um ein Ethylen/Alkyl(meth)acrylat/Maleinsäureanhydrid-Copolymer und bei (K) um PA-12 handelt.

## Claims

1. Thermoplastic composition comprising at least one polymer (M) forming a matrix in which are dispersed at least one polymer (S) and at least one polymer (K) and such that its tensile strength is greater than that of a composition comprising only (M) and (S), the proportion by weight of (M) being the same.

2. Composition according to Claim 1, in which the mixture (M) + (S) + (K) is in the form of a dispersed phase comprising nodules of (K), nodules of (K) entirely or partly encapsulated in (S), and nodules of (S).

3. Composition according to Claim 2, in which (M) is selected from polyolefins, polyamides, fluoropolymers, saturated polyesters, polycarbonate, styrene resins, PMMA, polyurethanes (TPU), copolymers having polyamide blocks, copolymers having polyester blocks and polyether blocks, PVC, ethylene-vinyl alcohol copolymers, and polyketones.

4. Composition according to any one of the preceding claims, in which (K) is selected from the same polymers as (M).

5. Composition according to any one of the preceding claims, in which (S) is selected from functionalized polyolefins, grafted aliphatic polyesters and polyamide-block polyether-block polymers, optionally grafted.

6. Composition according to one of the preceding claims, in which (M) is PA-11, (S) is an ethylene/alkyl (meth)acrylate/maleic anhydride copolymer and (K) is PA-12.
